# EUROPÄISCHE PATENTSCHRIFT

(11) **EP 1 405 780 B1**
(45) Veröffentlichungstag und Bekanntmachung des Hinweises auf die Patenterteilung: **21.06.2006**
(21) Anmeldenummer: 03020370.7
(22) Anmeldetag: 10.09.2003
(51) Int. Cl.: B61D 27/00, B60P 3/20, B61D 19/00

(54) **Schiebewandwagen zum Transport temperaturempfindlicher Güter auf dem Eisenbahnnetz**
Vehicle with sliding side panels, for the transport by railways of temperature sensitive products
Véhicule à parois latérales coulissantes, pour le transport par chemin de fer de produits sensibles à la température

(30) Priorität: 14.09.2002 DE 10242858
(43) Veröffentlichungstag der Anmeldung: 07.04.2004
(73) Patentinhaber: Waggonbau Elze GmbH & Co. Besitz KG, 31008 Elze (DE)
(72) Erfinder: Homes, Günter, 31020 Salzhemmendorf (DE)
(74) Vertreter: Gosch, Wolf-Dietrich

(56) Entgegenhaltungen:
- WO-A-98/07606
- DE-U- 29 813 340
- FR-A- 2 069 564
- US-A- 3 498 237
- US-A- 5 946 933

## Beschreibung

Die Erfindung betrifft einen Schiebewandwagen zum Transport temperaturempfindlicher Güter auf dem Eisenbahnnetz mit einem Laderaum, der allseits von wärmeisolierten Wandungen umgeben ist.

Derartige Schienenfahrzeuge , siehe z.B. FR206 9564 oder WO98/07606, sind zum Transport insbesondere von temperaturempfindlicher Gütern bei den Eisenbahnen im Einsatz. Der auf einem Untergestell aufgesetzte Wagenaufbau umschließt einen Laderaum, der mit einem Heiz/Kühlaggregat versehen ist, das den Laderaum je nach Außentemperatur entweder mit Warmluft oder mit Kaltluft versorgt. An den Längsseiten des Laderaumes befinden sich jeweils zwei Schiebewände, die beide jeweils über die gesamte Laderaumlänge verschoben werden können, wodurch eine besonders günstige Be- und Entladung stattfinden kann. Zum Transport der Güter werden die Schiebewände dann jeweils in ihre äußersten Endpositionen verbracht und abdichtend verschlossen.

Bei den gebräuchlichen Schiebewandwagen sind rund um den Laderaum Isolierungen vorgesehen, die im wesentlichen aus Isolierschaumblöcken bestehen, die in die zwischen den Wandungen umschlossenen Hohlräume eingebracht und eingeklebt werden. Dabei hat sich jedoch gezeigt, dass die einzelnen Isolierschaumblöcke sind bei den beim Transport auf den Schienen unvermeidlichen Bewegungen bzw. Stößen voneinander lösen bzw. gegeneinander verschieben, so dass die Isolierungen unvollkommen werden und Wärmebrücken entstehen, was im günstigsten Fall lediglich zu einer ungleichmäßigen Temperaturführung im Laderaum und gegebenenfalls auch zu Schwitzwasserbildungen führt. Darüber hinaus kann die Temperaturhaltung so nachteilig beeinflusst werden, dass z.B. bei sehr hohen Außentemperaturen die Kühlleistung des Kühlaggregates nicht mehr ausreicht.

Aufgabe der vorliegenden Erfindung ist es daher, einen Schiebewandwagen der eingangs genannten Art zu schaffen, der auch nach längerem Einsatz im Schienenverkehr eine optimale Rundum-Wärmeisolierung zuverlässig gewährleistet

Diese Aufgabe wird erfindungsgemäß durch die Merkmale des Anspruchs 1 gelöst.

Bei der Erfindung kann der Isolierschaum mit den Innenflächen der Wandungen eine so innige Verbindung eingehen, dass diese auch bei heftigeren Stößen und Verwindungen fest an den Innenflächen haften bleibt und auf diese Weise keine Lücken in der Wärmeisolierung entstehen. Der Schaum und seine Verbindung zu den Innenflächen der Wandungen ist so elastisch und so stabil, dass Wärmebrücken zuverlässig vermieden werden können.

Weitere Einzelheiten der Erfindung ergeben sich aus der nachfolgenden ausführlichen Beschreibung und den beigefügten Zeichnungen, in denen eine bevorzugte Ausführungsform der Erfindung beispielsweise veranschaulicht ist.

In den Zeichnungen zeigen:
- Figur 1:: Ein Schiebewandwagen in Seitenansicht;
- Figur 2:: ein Querschnitt entlang der Linie II-II in Figur 1;
- Figur 3:: eine Draufsicht auf eine den Laderaum nach oben begrenzende Dachplatte;
- Figur 4:: einen Schnitt entlang der Linie IV-IV in Figur 3;
- Figur 5: eine Seitenansicht auf ein die Dachplatte seitlich begrenzendes Dachlangträgerprofil in gerader Stellung und
- Figur 6:: ein Dachlangträgerprofil gemäß Figur 5 mit Vorsprengung in Seitenansicht;
- Figur 7:: einen Ausschnitt aus einer Bodenplatte mit der ihr zugekehrten Unterseite einer Schiebewand und
- Figur 8:: einen Ausschnitt aus einer Dachplatte und der ihr zugekehrten Oberseite einer Schiebewand.

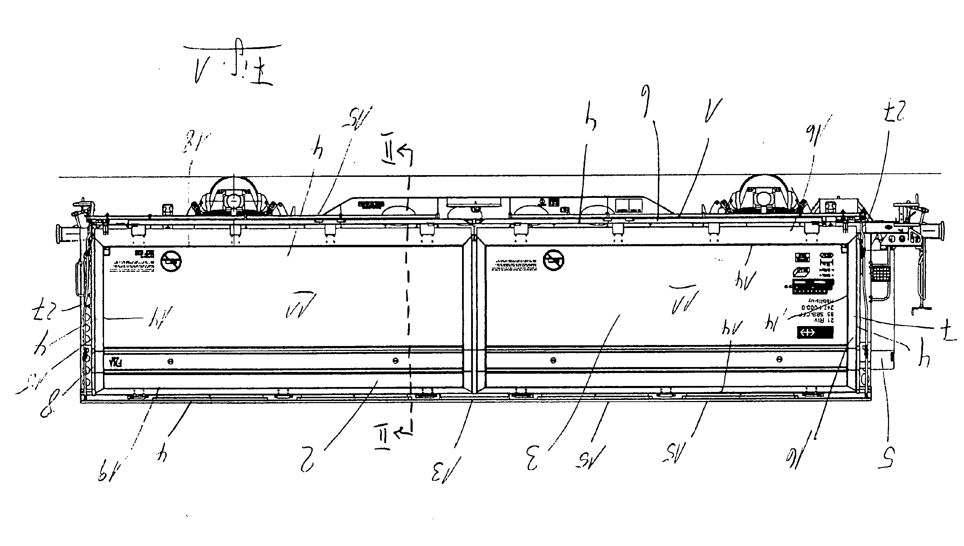

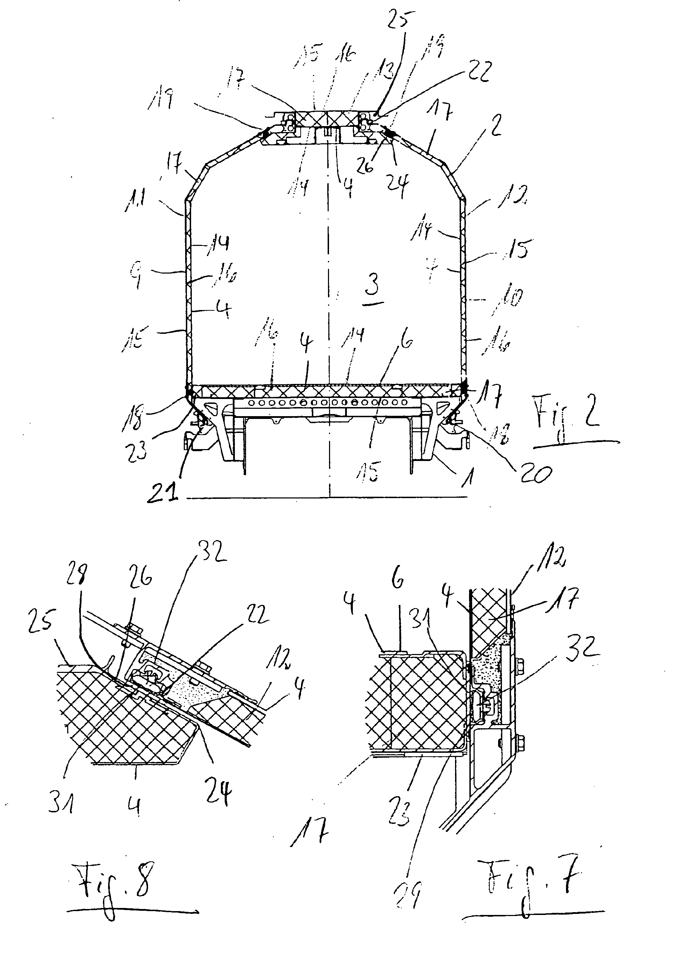

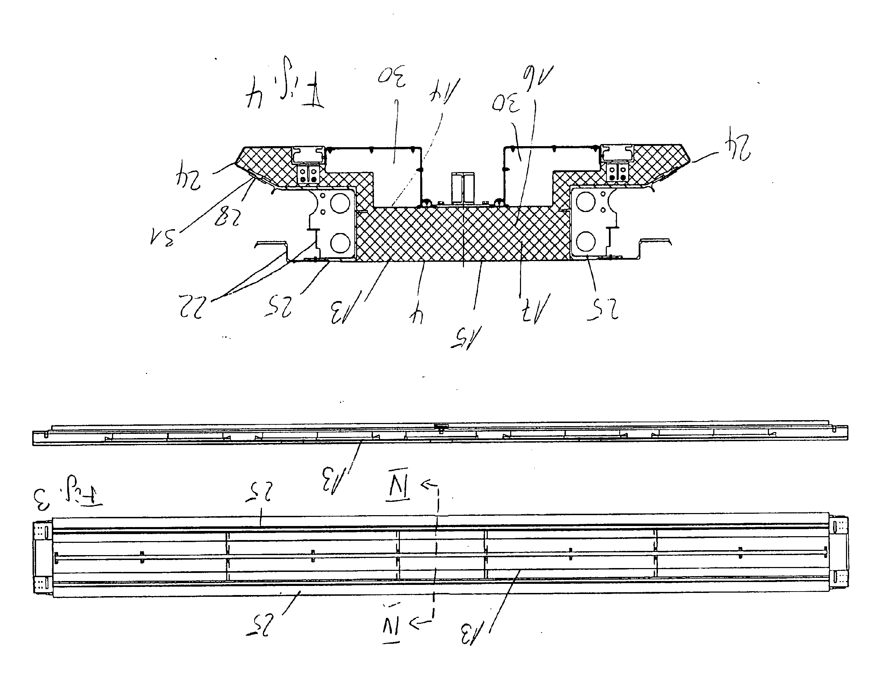

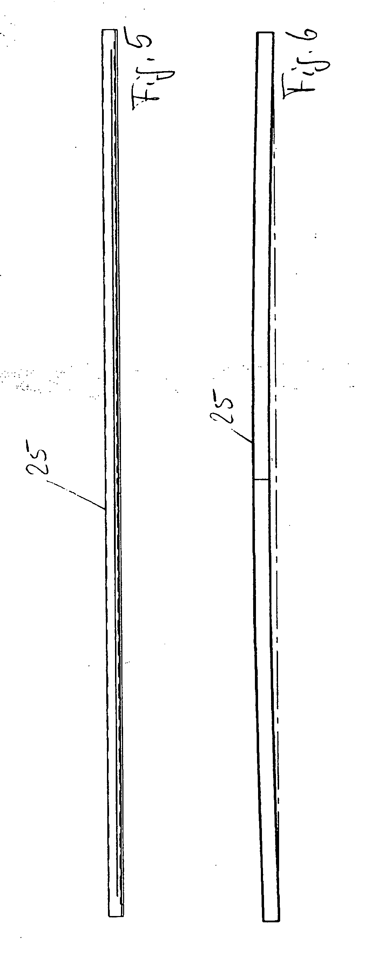

Ein Schiebewandwagen besteht im wesentlichen aus einem mit Fahrwerk versehenen Untergestell 1, auf dem ein Aufbau 2 angeordnet ist, der einen Laderaum 3 aufweist, der allseits von wärmeisolierten Wandungen 4 umgeben ist und der mit einem Heiz/Kühlaggregat 5 zur Versorgung des Laderaums 3 mit Warm- oder Kaltluft versehen ist. Die Wandungen 4 bestehen aus einer Bodenplatte 6, zwei Stirnwänden 7, 8 und an jeder Längsseite 9, 10 des Laderaums 3 jeweils zwei in seinen Längsrichtungen verschiebliche Schiebewände 11, 12 sowie einer den Laderaum 3 nach oben begrenzenden Dachplatte 13. Die Wandungen 4 weisen jeweils dem Laderaum 3 zugekehrte Innenplatten 14 und diesem abgewandte Außenplatten 15 auf, zwischen denen Hohlräume 16 vorgesehen sind, die jeweils vollständig mit Isolierschaum 17 ausgeschäumt sind. Zur thermischen Trennung sind die Innenplatten 14 und die Außenplatten 15 jeweils über Kunststoffprofile 31 miteinander verbunden, deren nach außen sichtbare Teile bei Verschleiß ausgetauscht werden können.

Die Schiebewände 11, 12 sind jeweils in Längsrichtungen des Laderaumes 3 über seine gesamte Länge verschieblich gelagert. Sie sind jeweils an ihren Unterseiten 18 mit Rollen 20 versehen, die in Rollenbahnen 21 geführt sind, die an der Bodenplatte 6 angeordnet sind. An ihren Oberseiten 19 sind sie in Gleitführungen 22 geführt, die an der Dachplatte 13 angeordnet sind. Dabei sind die an der Bodenplatte 6 vorgesehenen Rollenbahnen 21 seitlich unten an dieser angeordnet. Die Schiebewände 11, 12 überragen die Bodenplatte 6 in Richtung auf ihre Unterseite 23. Die Schiebewände 11, 12 überkragen die Dachplatte 13 im Bereich ihrer in Längsrichtung verlaufenden Seitenkanten 24. Oberhalb der Seitenkanten 24 ist die Dachplatte 13 in ihren Querrichtungen von Dachlangträgerprofilen 25 begrenzt, die in Längsrichtung der Dachplatte 13 verlaufen. Die Dachlangträgerprofile 25 sind in Richtung auf die dem Laderaum 3 abgewandte Oberseite 26 der Dachplatte 13 vorgewölbt, d.h. dass sie in unbelastetem Zustand eine leichte Vorwölbung der Dachplatte 13 nach oben außen aufweist. Die Dachplatte 13 ist mit in ihrer Längsrichtung verlaufenden Lüftführungen 30 versehen, durch die die im Heiz/Kühlaggregat 5 erzeugte temperierte Luft dem Laderaum 3 zugeführt wird. Diese Luftführungen 30 ragen nicht in den Laderaum 3 nach unten hinein, so dass sie insoweit vor Beschädigungen geschützt sind.

Die Schiebewände 11, 12 sind mit einem sie in einer Verschlusslage abdichtend festlegenden Verriegelungssystem 27 versehen. Das Verriegelungssystem 27 beaufschlagt die Schiebewände 11, 12 seitlich zur Bodenplatte 6 und oberhalb der Seitenkanten 24 der Dachplatte 13 abdichtend. Dabei wirken die Dachlangträgerprofile 25 auf die Schiebewände 11, 12 in der Weise ein, dass sie sie im Sinne einer Federwirkung in ihrer Verschlusslage festlegend beaufschlagen.

Zwischen den Schiebewänden 11, 12 und den ihnen zugekehrten Bereichen der Bodenplatte 6 und der Dachplatte 13 sind jeweils Kunststoffprofile 28, 29 vorgesehen, auf denen die Schiebewände 11, 12 zum einen gleitend gelagert sind und an die sie sich in ihrer Verschlusslage mit ihrer in sie eingelassenen umlaufenden Hohlkammerdichtung 32 abdichtend anlegen. Diese Kunststoffprofile 28, 29 bilden zugleich eine weitere thermische Trennung der insoweit miteinander in Berührung kommenden Wandungen 4 gegeneinander aus.

## Patentansprüche

1. Schiebewandwagen zum Transport temperaturempfindlicher Güter auf dem Eisenbahnnetz mit einem Laderaum (3), der allseits von wärmeisolierten Wandungen (4) umgeben ist, und die Wandungen (4) aus einer Bodenplatte (6), zwei Stirnwänden (7, 8), an jeder Längsseite des Laderaumes (3) zwei verschieblichen Schiebewänden (11, 12) und einer Dachplatte (13) bestehen, die in Sandwichbauweise ausgeschäumt sind und die Schiebewände (11,12) an ihren Unterseiten (18) mit Rollen (20) versehen sind, die in Rollenbahnen (21, 22) geführt sind, die an der Bodenplatte (6) vorgesehen sind und die Schiebewände (11, 12) an ihren Oberseiten (19) und der Dachplatte (13) mit Gleitführungen gleitend gelagert sind, **dadurch gekennzeichnet, dass** die Dachplatte (13) seitlich mit in Längsrichtung verlaufenden Dachlangträgerprofilen (25) versehen ist, die in Richtung auf die dem Laderaum (3) abgewandte Oberseite (26) der Dachplatte (13) vorgewölbt sind.

2. Schiebewandwagen nach Anspruch 1, **dadurch gekennzeichnet, dass** die Dachlangträgerprofile (25) die Schiebewände (11, 12) im Sinne einer Federwirkung in ihrer Verschlusslage festlegend beaufschlagen.

3. Schiebewandwagen nach Anspruch 1 bis 2, **dadurch gekennzeichnet, dass** die die Wandungen (4) bildenden Innenplatten (14) und Außenplatten (15) jeweils über Wärmebrücken vermeidende Kunststoffprofile (31) verbunden sind, die im Bereich der Schiebewände (11, 12) als austauschbare Dichtflächen ausgebildet sind.

4. Schiebewandwagen nach Anspruch 1 bis 3, **dadurch gekennzeichnet, dass** die Schiebewände (11,12) jeweils in Längsrichtung des Laderaumes (3) über seine gesamte Länge verschieblich gelagert sind.

## Claims

1. Vehicle with sliding side panels for the transport by railways of temperature-sensitive products with a loading area (3) which is surrounded on all sides by heat-insulated panels (4) and the panels (4) comprise a bottom panel (6), two end panels (7, 8), on each longitudinal side of the loading area (3) two displaceable sliding side panels (11, 12) and a roof panel (13) which are foamed in sandwich construction and the sliding side panels (11, 12) are provided on their lower sides (18) with rollers (20) which are guided in roller tracks (21, 22) which are disposed on the bottom panel (6) and the sliding side panels (11, 12) are slidingly mounted on their upper sides (19) and the roof panel (13) with sliding guides, **characterised in that** the roof panel (13) is provided to the side with roof longitudinal carrier profiles (25) running in the longitudinal direction which are curved in the direction of the upper side (26) of the roof panel (13) facing away from the loading area (3).

2. Vehicle with sliding side panels according to claim 1, **characterised in that** the roof longitudinal carrier profiles (25) impact the sliding side panels (11, 12) in the sense of a spring effect fixing them in their locked position.

3. Vehicle with sliding side panels according to claims 1 to 2, **characterised in that** the inner panels (14) and outer panels (15) forming the panels (4) are respectively connected by means of plastic profiles (31) avoiding heat bridges which are formed in the region of the sliding side panels (11, 12) as exchangeable sealing surfaces.

4. Vehicle with sliding side panels according to claims 1 to 3, **characterised in that** the sliding side panels (11, 12) are respectively mounted so as to be displaceable in the longitudinal direction of the loading area (3) over its entire length.

## Revendications

1. Wagon à faces coulissantes pour le transport de marchandises sensibles à la température sur le réseau de chemin de fer, comprenant un compartiment à marchandises (3) qui est entouré de toute part par des parois isolées thermiquement (4), les parois (4) étant constituées par une plaque de fond (6) , par deux faces frontales (7, 8), par deux faces coulissantes mobiles (11, 12) de chaque côté longitudinal du compartiment à marchandises (3) et par une plaque de toit (13), et étant transformées en mousse pour obtenir une structure en sandwich, les faces coulissantes (11, 12) étant munies de galets (20) sur leurs côtés inférieurs (18), qui sont guidés dans des voies à galets (21, 22) qui sont prévues sur la plaque de fond (6), les faces coulissantes (11, 12) étant montées en glissement avec des guidages par glissement sur leurs côtés supérieurs (19) et sur la plaque de toit (13), **caractérisé en ce que** la plaque de toit (13) est munie, en position latérale de profilés longitudinaux de toit (25) s'étendant en direction longitudinale, qui présentent un bombement faisant saillie dans la direction du côté supérieur (26) de la plaque de toit (13) se détournant du compartiment à marchandises.

2. Wagon à faces coulissantes selon la revendication 1, **caractérisé en ce que** les profilés longitudinaux de toit (25) exercent un effet de fixation dans leur position de fermeture sur les faces coulissantes (11, 12), à la manière d'un ressort.

3. Wagon à faces coulissantes selon les revendications 1 à 2, **caractérisé en ce que** les plaques internes (14) et les plaques externes (15) formant les parois (4) sont reliées l'une à l'autre via des profilés (31) en matière synthétique supprimant les ponts thermiques, qui sont réalisés sous la forme de surfaces étanches échangeables dans la zone occupée par les faces coulissantes (11, 12).

4. Wagon à faces coulissantes selon les revendications 1 à 3, **caractérisé en ce que** les faces coulissantes (11, 12) sont montées en mobilité respectivement dans la direction longitudinale du compartiment à marchandises (3), sur toute la longueur de ce dernier.
